# EUROPEAN PATENT SPECIFICATION

(11) **EP 2 716 988 B1**
(45) Date of publication and mention of the grant of the patent: **10.01.2018**
(21) Application number: 13187376.2
(22) Date of filing: 04.10.2013
(51) Int. Cl.: F24F 11/00, G05D 23/19

(54) **Air conditioning control system, air conditioning control method and program**
Klimaanlagensteuerungssystem, Klimaanlagensteuerungsverfahren und Programm
Système de commande de climatisation, procédé de commande de conditionnement d'air et programme

(30) Priority: 05.10.2012 JP 2012222875
(43) Date of publication of application: 09.04.2014
(73) Proprietor: Mitsubishi Electric Corporation, Chiyoda-ku Tokyo 100-8310 (JP)
(72) Inventor: Matsumoto, Takashi, Tokyo 100-8310 (JP); Yano, Hirotoshi, Tokyo 100-8310 (JP); Yoshikawa, Toshiaki, Tokyo 100-8310 (JP)
(74) Representative: Pfenning, Meinig & Partner mbB

(56) References cited:
- FR-A1- 2 329 196
- JP-A- 2009 150 590
- JP-A- 2010 025 359
- JP-A- 2011 075 138
- JP-A- 2011 134 199
- US-A1- 2003 127 527

## Description

This application relates generally to an air conditioning control system, and air conditioning control method and program.

In recent years, devices have been developed that accomplish air conditioning in accordance with the position and movement of a user within a room (for example, refer to Unexamined Japanese Patent Application Kokai Publication No. 2006-220405). With this device, even when the user moves inside the room it is possible to provide an air environment suited to the user who has moved.

In general, air conditioning equipment is often installed over a lengthy period of several years or more. The device disclosed in Unexamined Japanese Patent Application Kokai Publication No. 2006-220405 accomplishes air conditioning in accordance with movement of a user over a short time, but it is difficult to accomplish air conditioning in accordance with changes in the user's status over this kind of lengthy period.

For example, it is possible that the user's metabolic rate could change gradually during the time in which the air conditioning equipment is installed. Changes in the metabolic rate have an effect on the user's effective body temperature, so it is conceivable that the air environment suitable to the user gradually changes as well. Accordingly, the necessity arises for the user to repeatedly set and correct target values for the temperature, humidity and/or the like, creating the concern that operation of the air conditioning equipment by the user could become complicated. JP 2010 025359 A discloses an air-conditioning control system for automatically detecting body information such as sex, age group and body type of unspecified persons staying in a room, and automatically controlling air-conditioning on the basis of the body information. JP 2011 134199 A discloses a content providing system which is suitable to provide contents suitable for a user's changing age, like e.g. an animation in the backseat of an automobile in accordance with the taste changing with the user's age.

In consideration of the foregoing, it is an objective of the present invention to simplify operation of air conditioning equipment by a user.

In order to achieve the above-described objective, the air conditioning control system (10) of the present invention is characterized by comprising:
a first memory device (23) for acquiring and storing the age of a user (U1);
a calculator (21) for measuring the time that has elapsed from when the age of the user (U1) was acquired by the first memory device (23), and calculating the current age of the user (U1) from the age of the user (U1) stored in the first memory device (23) and the calculated time;
a second memory device (23) for storing target values for the state of a room that is the subject of air conditioning, correlated with the age; and
an air conditioner (32) for accomplishing air conditioning based on the target values correlated to the age calculated by the calculator (21).

With the present invention, an air conditioner accomplishes air conditioning based on target values correlated to the current age of the user. Through this, an air environment suited to the user is provided over a lengthy period. Accordingly, it is possible to simplify operation of air conditioning equipment by the user.

A more complete understanding of this application can be obtained when the following detailed description is considered in conjunction with the following drawings, in which:
FIG. 1 is a block diagram showing an air conditioning control system according to a first preferred embodiment;
FIG. 2 is a drawing showing target value data;
FIG. 3 is a flowchart showing a process executed by a processor;
FIG. 4 is a block diagram showing an air conditioning control system according to a second preferred embodiment;
FIG. 5 is a drawing showing target value data;
FIG. 6 is a flowchart showing a process executed by a processor; and
FIG. 7 is a drawing showing target value data according to a variation.

Below, the preferred embodiments of the present invention are described in detail with reference to the drawings.

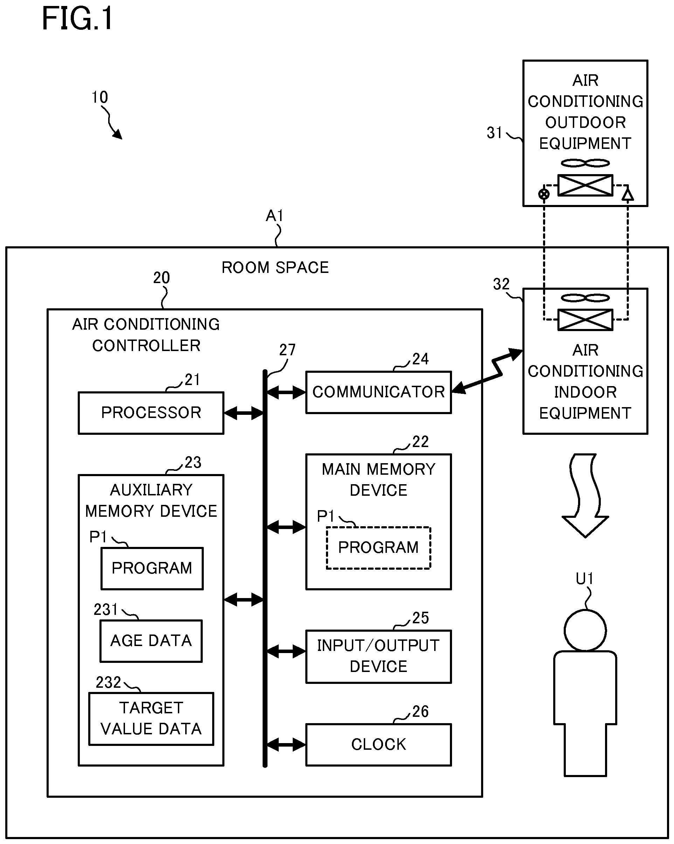

FIG. 1 shows an air conditioning control system 10 according to a first preferred embodiment. The air conditioning control system 10 is a system for regulating the status of air in a room space A1. This air conditioning control system 10 comprises an air conditioning controller 20, air conditioning outdoor equipment 31 and air conditioning indoor equipment 32, as shown in FIG. 1. A user U1 in FIG. 1 is the person primarily using the room space A1.

The air conditioning controller 20 is a remote terminal for controlling the air conditioning indoor equipment 32. The air conditioning controller 20 is constituted such that operation is possible while being held in the user's U1 hand. The air conditioning controller 20 comprises a processor 21, a main memory device 22, an auxiliary memory device 23, a communicator 24, an input/output device 25 and a clock 26. The main memory device 22, the auxiliary memory device 23, the communicator 24, the input/output device 25 and the clock 26 are all connected to the processor 21 via an internal bus 27.

The processor 21 comprises a CPU (Central Processing Unit) and/or the like, for example. The processor 21 executes the below-described processes in accordance with a program P1 stored in the auxiliary memory device 23. The main memory device 22 comprises RAM (Random Access Memory) and/or the like, for example. The main memory device 22 loads program P1 stored in the auxiliary memory device 23. Furthermore, the main memory device 22 is used as a work area for the processor 21.

The auxiliary memory device 23 comprises a non-volatile memory and/or the like as exemplified by flash memory or a hard disk, for example. The auxiliary memory device 23 stores the program P1, age data 231 indicating the age of the user U1, target value data 232 indicating target values for control by the air conditioning controller 20, and other data. The auxiliary memory device 23 supplies data used by the processor 21 to the processor 21 in accordance with instructions from the processor 21, and stores data supplied from the processor 21.

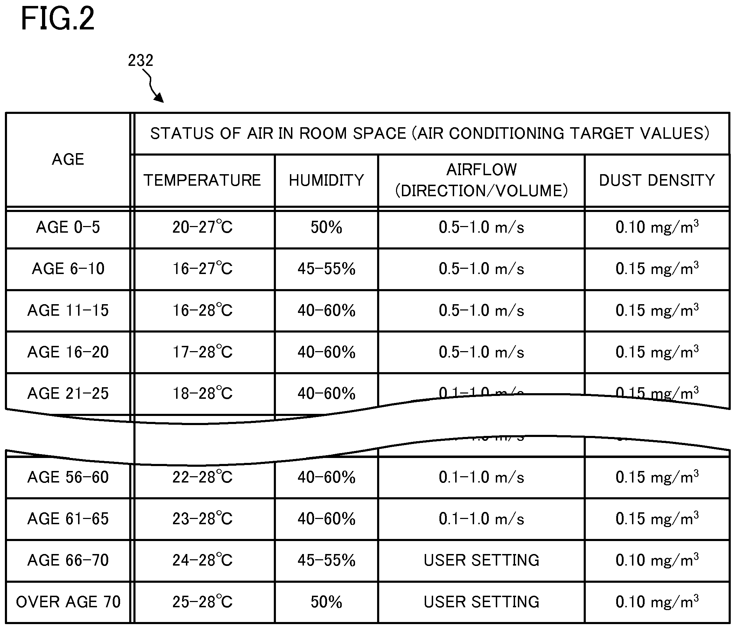

FIG. 2 shows an example of the target value data 232. As shown in FIG. 2, the target value data 232 is data specifying the state of the room space A1 that is the target of air conditioning, correlated to age. The state of the room space A1 indicates the air conditioning environment suited to the user U1 of an age correlated to this state, and is used as a target value for air conditioning. The state of the room space A1 is, for example, the temperature, humidity, air flow including wind direction and wind volume, and dust density, and/or the like.

The target value data 232 may specify the state of the room space A1 using preset values, and may specify the state of the room space A1 using preset ranges. This target value data 232 is written in the auxiliary memory device 23 in advance, preceding installation of the air conditioning control system 10. The "user setting" in FIG. 2 means that that value is not particularly specified and is set in accordance with input by the user U1.

The communicator 24 relays communication between the processor 21 and the air conditioning indoor equipment 32. It is fine for the communicator 24 to accomplish wired communication with the air conditioning indoor equipment 32 via a cable, and it is fine for the communicator 24 to accomplish wireless communication with the air conditioning indoor equipment 32 according to standards such as wireless LAN (Local Area Network) and/or the like.

The input/output device 25 comprises an input device such as an input key or an operation button and/or the like, and an output device such as an LCD (Liquid Crystal Display) or speaker and/or the like. The input/output device 25 notifies the processor 21 of instructions input by the user U1. In addition, the input/output device 25 presents various information to the user U1 in accordance with instructions from the processor 21.

The clock 26 comprises a liquid crystal oscillator. The clock 26 notifies the processor 21 of the current time in accordance with requests by the processor 21.

The air conditioning outdoor equipment 31 and the air conditioning indoor equipment 32 configure vapor compression-type air conditioning equipment with the room space A1 as the air conditioning subject. The air conditioning outdoor equipment 31 and the air conditioning indoor equipment 32 cause heat to move between the outside air and the air in the room space A1 by causing a coolant to circulate.

The air conditioning outdoor equipment 31 comprises a heat exchanger, a compressor and an expansion valve and/or the like. The air conditioning outdoor equipment 31 is positioned, for example, on the veranda or in the garden and/or the like of a typical house. Furthermore, the air conditioning outdoor equipment 31 causes heat to move between outside air and the coolant.

The air conditioning indoor equipment 32 comprises a heat exchanger, a fan for blowing air conditioned air to the room space A1 from a jet, and a flap for controlling wind direction, and/or the like. The air conditioning indoor equipment 32 is placed on the ceiling or a wall surface of the room space A1. Furthermore, the air conditioning indoor equipment 32 blows air conditioned air in which the temperature and humidity have been adjusted by causing heat to move between the air of the room space A1 and the coolant in accordance with control signals from the air conditioning controller 20.

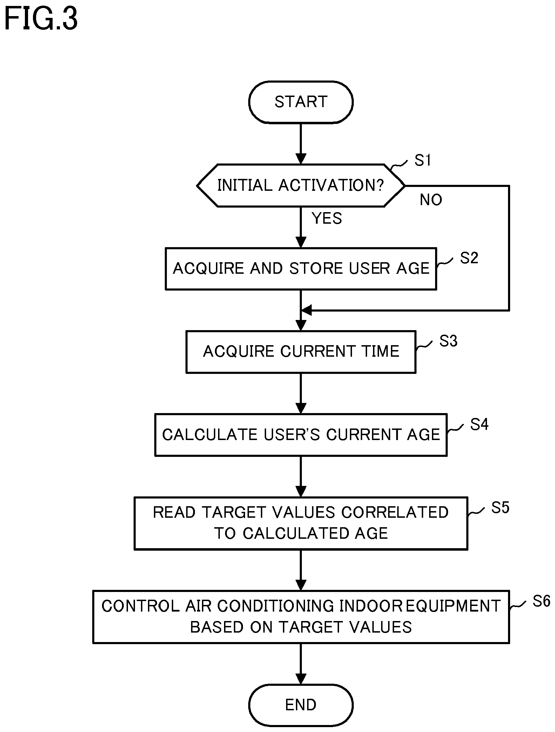

Next, the process executed by the air conditioning controller 20 is described with reference to FIG. 3.

FIG. 3 shows the process executed by the processor 21 of the air conditioning controller 20. This process is started by the user U1 activating the air conditioning controller 20.

First, the processor 21 determines whether or not the air conditioning controller 20 has activated for the first time (step S1). Specifically, the processor 21 determines whether or not the air conditioning controller 20 has been activated for the first time by reading from the auxiliary memory device 23 a flag indicating whether or not the air conditioning controller 20 has been activated in the past. When it is determined that the air conditioning controller 20 has not been activated for the first time (step S1; No), the processor 21 transitions the process to step S3.

On the other hand, when it is determined that the air conditioning controller 20 has been activated for the first time (step S1; Yes), the processor 21 acquires and stores the age of the user U1 (step S2). Specifically, the processor 21 causes a screen prompting the user U1 to input an age to be displayed on the input/output device 25. Then, the processor 21 acquires the age input by the user U1 and causes the age in combination with the time (including day, month and year) that the age was acquired to be stored as the age data 231 in the auxiliary memory device 23. At this time, it would be fine for the processor 21 to write a flag indicating that the air conditioning controller 20 has been activated in the auxiliary memory device 23.

Next, the processor 21 acquires the current time from the clock 26 (step S3). Following this, the processor 21 calculates the current age of the user U1 (step S4). Specifically, the processor 21 reads from the auxiliary memory device 23 the age of the user U1 and the time that age was acquired contained in the age data 231. Then, the processor 21 calculates the current age of the user U1 by adding to the read age of the user U1 the time that has elapsed from when this age of the user U1 was acquired. The processor 21 measures the elapsed time by subtracting the time that was read out from the current time.

Next, the processor 21 reads target values correlated to the calculated age from the auxiliary memory device 23 (step S5). Following this, the processor 21 controls the air conditioning indoor equipment 32 on the basis of the target values read (step S6). Through this, the air conditioning indoor equipment 32 accomplishes air conditioning based on the target values correlated to the current age of the user U1. Following this, the processor 21 concludes the process.

As described above, the air conditioning control system 10 according to this preferred embodiment accomplishes air conditioning based on target values correlated to the current age of the user U1. For example, when the room space A1 is a children's room and the user U1 is a child, with each passing year the basal metabolic rate of the user U1 changes significantly and the air environment suitable for the user U1 changes significantly as well. Even in this kind of case, it is possible for the air conditioning control system 10 to provide a comfortable air environment for the user U1 over a lengthy period of several years or more. Accordingly, it is possible to simplify operation of air conditioning equipment by the user U1.

In addition, by using the appropriately set target value data 232, it is possible for the air conditioning controller 20 to realize both energy conservation and comfort. For example, when a user U1 in a young age range with relatively high metabolic rate uses air conditioning for cooling, the target value of the temperature is set relatively high and the target value of the air flow (wind amount) is set high, and through this it is possible to realize both energy conservation and comfort. On the other hand, an elderly person would have a relatively low metabolic rate and their skin would also dry out easily. Consequently, when an elderly user U1 is using air conditioning for cooling, it would be fine to set the target value of the temperature relatively high and set a fluctuating air flow control (air flow that periodically changes, and/or the like) as the target value for air flow. When the target value of the temperature is set relatively high during air conditioning for cooling, power consumption is reduced by around 10-30%, and it is possible to maintain the effective body temperature of the user U1 at a comfortable temperature through air flow control.

Next, a second preferred embodiment will be described, primarily focusing on points of difference from the above-described first preferred embodiment. For compositions that are the same or equivalent to those of the above-described preferred embodiment, the same reference signs are used and explanation of such is omitted or abbreviated here.

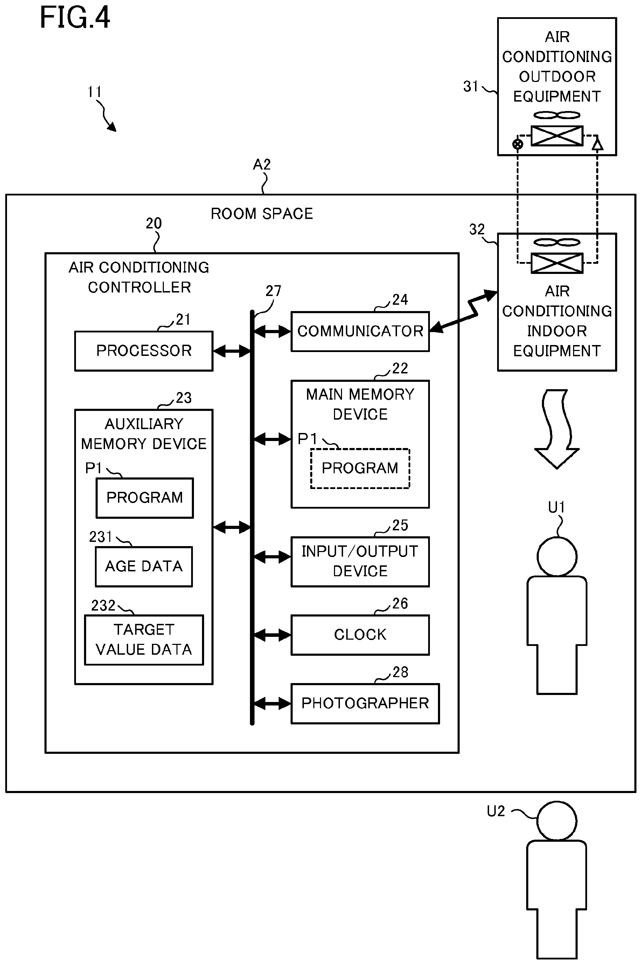

An air conditioning control system 11 according to this preferred embodiment differs from the system according to the first preferred embodiment in identifying multiple users U1 and U2 and accomplishing air conditioning in accordance with the attributes of the respective users. The air conditioning control system 11 adjusts the state of air in a room space A2 as shown in FIG. 4. The room space A2 is a room used by the multiple users U1 and U2, such as a living room and/or the like, for example.

The air conditioning controller 20 according to this preferred embodiment comprises a photographer 28, as shown in FIG. 4. The photographer 28 is for example a camera comprising a CMOS (Complementary Metal Oxide Semiconductor) photography element and/or the like. The photographer 28 is positioned with the angle of view thereof and the attachment position adjusted so as to be capable of photographing the operator who operates the air conditioning controller 20.

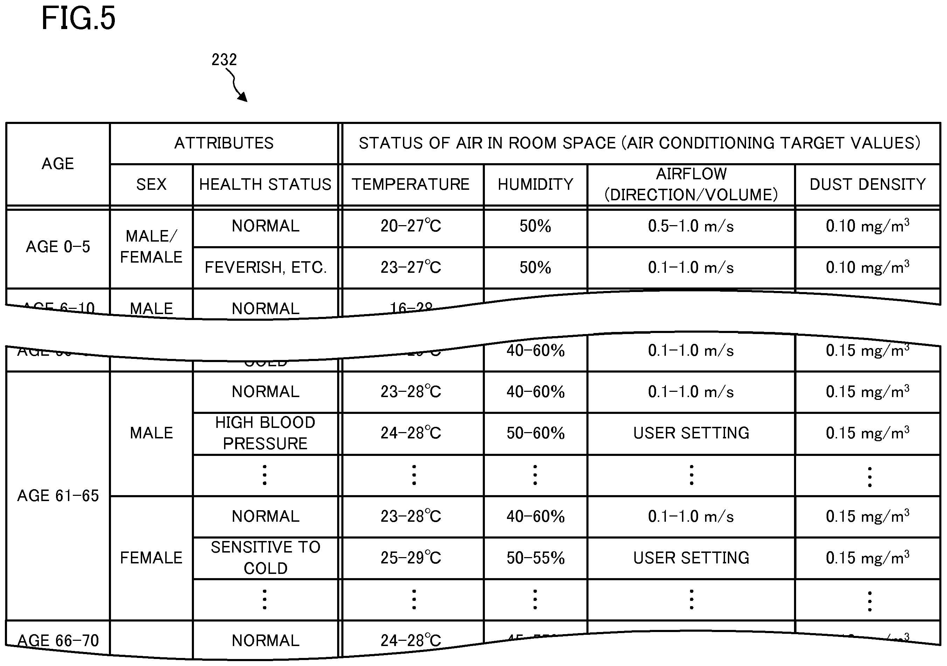

FIG. 5 shows an example of target value data 232 according to this preferred embodiment. As shown in FIG. 5, the target value data 232 is data specifying the state of the room space A2 correlated to age and attributes including sex and health status. The health status includes, for example, normal status, chronic disease, clinical history and physical condition, and/or the like.

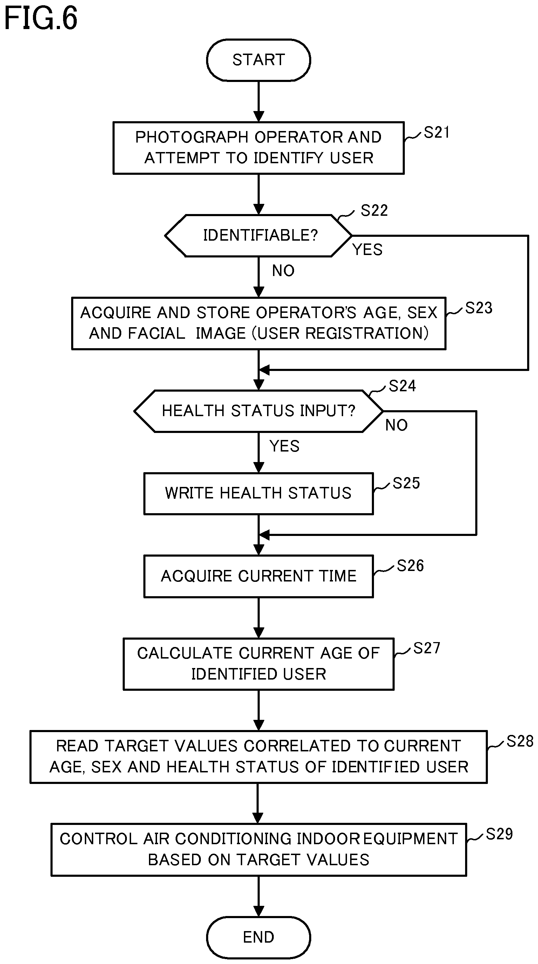

Next, the process executed by the processor 21 according to this preferred embodiment is described with reference to FIG. 6.

First, the processor 21 photographs the operator and attempts to identify the user (step S21). Specifically, the processor 21 causes the operator to be photographed by the photographer 28 and extracts a facial image from the photographed image. Then, the processor 21 attempts to identify the user by comparing the extracted facial image and facial images of users recorded in the auxiliary memory device 23 in advance. For example, as shown in FIG. 4, when the user U1 of the room space A2 is operating the air conditioning controller 20, the processor 21 attempts to identify the user U1.

Next, the processor 21 determines whether or not identification of the user is possible (step S22). Specifically, the processor 21 determines whether or not the facial image photographed matches any of the facial images stored in the auxiliary memory device 23. When the determination is that identification is possible (step S22; Yes), the processor 21 migrates the process to step S24.

When it is determined that identification is impossible (step S22; No), the processor 21 acquires and stores in the auxiliary memory device 23 the age, sex and facial image of the operator (step S23). Specifically, the processor 21 causes a screen promoting input of the age and sex to be displayed to the operator on the input/output device 25. In addition, the processor 21 causes the operator to be photographed by the photographer 28 and extracts a facial image of the operator from the photographed image. Then, the processor 21 stores the input age and sex in the auxiliary memory device 23, linked to the facial image. Through this, the operator is registered in the air conditioning control system 11 as a new user.

Next, the processor 21 determines whether or not a health status has been input (step S24). Specifically, the processor 21 causes a screen for inputting information related to health status to be displayed on the input/output device 25. Then, the processor 21 determines whether or not information related to health status has been input via the input/output device 25. When it is determined that the health status has not been input (step S24; No), the processor 21 migrates the process to step S26.

When it is determined that the health status has been input (step S24: Yes), the processor 21 writes the input health status in the auxiliary memory device 23 (step S25). Specifically, the processor 21 stores the input health status in the auxiliary memory device 23 linked to the facial image of the user identified in step S21 or the user registered in step S23.

Next, the processor 21 acquires the current time (step S26). Following this, the processor 21 calculates the current age of the identified user (step S27). Specifically, the processor 21 calculates the current age of the identified user by reading from the auxiliary memory device 23 the age of the identified user and the time when that age was acquired. When the air conditioning controller 20 is activated for the first time, it would be fine in step S27 for the processor 21 to acquire the age registered in step S23 in place of the calculated age as the current age of the identified user.

Next, the processor 21 reads from the target value data 232 target values correlated to the current age, sex and health status of the identified user (step S28). When the health status of the identified user has not been input, the processor 21 reads the target values deeming that the identified user is in a normal status.

Next, the processor 21 controls the air conditioning indoor equipment 32 based on the target values read (step S29). Following this, the processor 21 concludes the process.

As described above, the air conditioning control system 11 according to this preferred embodiment identifies the user and accomplishes air conditioning based on target values correlated to the current age of the identified user. Through this, even when the room space A2 is used by multiple users, it is possible for the air conditioning control system 11 to provide an air environment suitable for the user present in the room space A2.

In addition, the air conditioning controller 20 identifies each user by shooting a facial image of the operator. Through this, it is possible for each user to cause themselves to be identified by the air conditioning controller 20 without complicated operation of the air conditioning controller 20. The method by which the air conditioning controller 20 identifies each user is not limited to comparison of facial images, for it would be fine to use ID and password input, fingerprint authentication, voice authentication or other authentication method.

In addition, the air conditioning controller 20 accomplishes air conditioning based on target values correlated to each user's attributes. It is known that the basal metabolic rate not only changes with age but also differs depending on sex and health status. Accordingly, it is possible for the air conditioning controller 20 according to this preferred embodiment to provide an air environment more suitable to a user than the controller according to the first preferred embodiment.

The preferred embodiments of the present invention were described above, but the preferred embodiment are intended to be illustrative of the present invention and not limiting.

For example, it would be fine for the auxiliary memory device 23 to store target values for the state of the room spaces A1 and A2 by time slot as the target value data 232. Furthermore, it would be fine for the air conditioning controller 20 to accomplish air conditioning based on the target values for the time slot containing the current time. In this case, it is possible for the air conditioning controller 20 to provide an air environment (room temperature) suitable to changes in (the rhythm of) the body temperature of each user during one day.

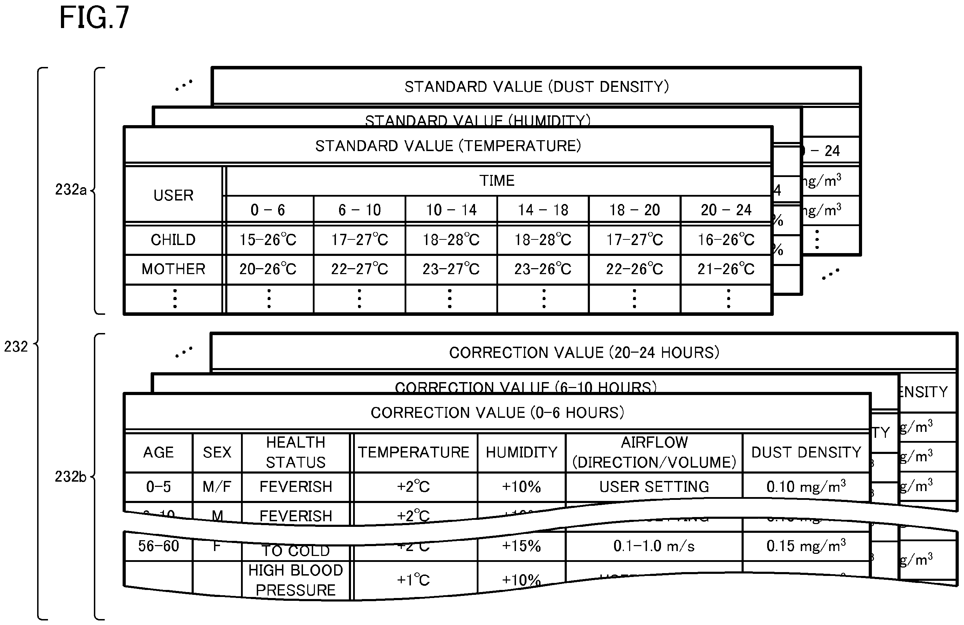

In addition, it would be fine for the auxiliary memory device 23 to store as the target value data 232 standard values (or reference values) 232a for each user and correction values 232b correlated to age, sex and health status, as shown in FIG. 7. When the target value data 232 shown in FIG. 7 is used, it is easy for the lifestyle patterns of each user learned based on detected values from sensors (for example, infrared ray sensors) and operating times of other equipment to be reflected in the standard values 232a.

In addition, it would be fine to treat the weight of each user as an attribute of that user in addition to sex and health status, and it would be fine to treat the weight as an attribute of the user in place of health status. Weight is known to directly affect basal metabolic rate, so when weight is treated as an attribute of the user, it is possible to provide a more comfortable air environment.

In addition, it would be fine to treat body activity level and body fat percentage as attributes of the user. It would be fine for the body activity level of the user to be a level proportional to the average exercise time of the user, for example, or a level correlated to the user's occupation.

The air conditioning controller 20 according to the above-described preferred embodiments acquired the user's age and/or the like via the input/output device 25, but this is intended to be illustrative and not limiting. For example, it would be fine for an age input via other equipment such as a personal computer or tablet and/or the like to be acquired through wireless communication.

The air conditioning controller 20 according to the above-described preferred embodiments stored the target value data 232 in the auxiliary memory device 23, but this is intended to be illustrative and not limiting. For example, it would be fine for the air conditioning controller 20 to acquire the target value data 232 from an external server via the Internet.

It is possible for the functions of the air conditioning controller 20 according to the above-described preferred embodiments to be realized through dedicated hardware, and through a regular computer system.

For example, it is possible for the program P1 stored in the auxiliary memory device 23 to be stored on and distributed via a computer-readable recording medium such as a flexible disk, CD-ROM (Compact Disk Read-Only Memory), DVD (Digital Versatile Disk) MO (Magneto-Optical disk) and/or the like, and for a device executing the above-described processes to be created by installing that program on a computer.

In addition, it would be fine to store the program on a disk device and/or the like possessed by a prescribed server device on a communication network such as the Internet and/or the like, and for example to download this program to a computer by overlaying the program on carrier waves.

In addition, it is possible to achieve the above-described processes by also activating and executing the program while transferring the program via a communication network.

Furthermore, it is possible to achieve the above-described processes by causing all or a portion of the program to be executed on a server device, and for a computer to execute the program while sending and receiving information related to that process via a communication network.

When the above-described functions are realized by an OS (Operating System) or are realized through cooperation between an OS and applications, it would be fine for only the portion other than the OS to be stored and distributed via a medium, and also to be downloaded to a computer.

In addition, the means of realizing the functions of the processor 21 is not limited to software, for it would be fine for all or a portion thereof to be realize through dedicated hardware (circuits and/or the like).

## Claims

1. An air conditioning control system (10) **characterized by** comprising:
a first memory device (23) for acquiring and storing the age of a user (U1);
a calculator (21) for measuring the time that has elapsed from when the age of the user (U1) was acquired by the first memory device (23), and calculating the current age of the user (U1) from the age of the user (U1) stored in the first memory device (23) and the calculated time;
a second memory device (23) for storing target values (232) for the state of a room that is the subject of air conditioning, correlated with the age; and
an air conditioner (32) for accomplishing air conditioning based on the target values (232) correlated to the age calculated by the calculator (21).

2. The air conditioning control system (11) according to Claim 1, **characterized by** further comprising an identifier (28) for identifying each of multiple users (U1, U2);
wherein the first memory device (23) acquires and stores the age of each of the multiple users (U1, U2); and
the calculator (21) calculates the current age of the user (U1) identified by the identifier.

3. The air conditioning control system (11) according to Claim 2, **characterized in that** the identifier (28) photographs the user (U1) and identifies the user (U1) based on the image shot.

4. The air conditioning control system (11) according to any of Claims 1 through 3, **characterized in that**:
the first memory device (23) acquires and stores attributes of the user (U1) including at least one out of the user's sex, weight, body activity level and health status;
the second memory device (23) stores the target values (232) for the status of the room that is the target of air conditioning, correlated to the attributes; and
the air conditioner (32) accomplishes air conditioning based on the target values (232) correlated to the attributes of the user (U1) stored in the first memory device (23).

5. The air conditioning control system (11) according to Claim 4, **characterized in that** the target values (232) include standard values (232a) for each user and correction values (232b) correlated to the attributes.

6. The air conditioning control system (10) according to any of Claims 1 through 5, **characterized in that** the second memory device (23) stores as target values (232) for the status of the room at least one target value (232) from among the temperature, humidity, airflow and dust density of the room that is the target of air conditioning.

7. The air conditioning control system (10) according to any of Claims 1 through 6, **characterized in that**:
the second memory device (23) stores the target values (232) for the status of the room that is the target of air conditioning by time slot; and
the air conditioner (32) accomplishes air conditioning based on the target values (232) for that time slot.

8. An air conditioning control method **characterized by** including:
a memory step for acquiring and storing the age of a user;
a calculation step for measuring the time that has elapsed from when the age of the user was acquired in the memory step, and calculating the current age of the user from the age of the user stored in the memory step and the calculated time; and
an air conditioning step for accomplishing air conditioning based on preset target values (232) correlated to the age calculated in the calculation step.

9. A program (P1) **characterized by** causing a computer (20) to function as:
a first memory device (23) for acquiring and storing the age of a user (U1);
a calculator (21) for measuring the time that has elapsed from when the age of the user (U1) was acquired by the first memory device (23), and calculating the current age of the user (U1) from the age of the user (U1) stored in the first memory device (23) and the calculated time;
a second memory device (23) for storing target values (232) for the state of a room that is the subject of air conditioning, correlated with the age; and
an output device (24) for outputting a control signal for accomplishing air conditioning based on the target values (232) correlated to the age calculated by the calculator (21).

## Patentansprüche

1. Klimatisierungssteuersystem (10), **gekennzeichnet durch** umfassend:
eine erste Speichereinrichtung (23) zum Erwerben und Speichern des Alters eines Nutzers (U1);
einen Rechner (21) zum Messen der Zeit, die ab dem Zeitpunkt verstrichen ist, zu welchem das Alter des Nutzers (U1) durch die erste Speichereinrichtung (23) erworben wurde, und zum Berechnen des derzeitigen Alters des Nutzers (U1) aus dem Alter des Nutzers (U1), das in der ersten Speichereinrichtung (23) gespeichert ist, und der berechneten Zeit;
eine zweite Speichereinrichtung (23) zum Speichern von Zielwerten (232) für den Zustand eines Raums, der der Gegenstand der Klimatisierung ist, korreliert mit dem Alter; und
eine Klimaanlage (32) zum Ausführen der Klimatisierung auf Grundlage der Zielwerte (232), die mit dem durch den Rechner (21) berechneten Alter korreliert sind.

2. Klimatisierungssteuersystem (11) nach Anspruch 1, **gekennzeichnet durch** ferner umfassend einen Identifikator (28) zum Identifizieren von jedem mehrerer Nutzer (U1, U2);
wobei die erste Speichereinrichtung (23) das Alter von jedem der mehreren Nutzer (U1; U2) erwirbt und speichert; und
der Rechner (21) das derzeitige Alter des durch den Identifikator identifizierten Nutzers (U1) berechnet.

3. Klimatisierungssteuersystem (11) nach Anspruch 2, **dadurch gekennzeichnet, dass** der Identifikator (28) den Nutzer (U1) fotografiert und den Nutzer (U1) auf Grundlage des aufgenommenen Bildes identifiziert.

4. Klimatisierungssteuersystem (11) nach einem der Ansprüche 1 bis 3, **dadurch gekennzeichnet, dass**:
die erste Speichereinrichtung (23) Attribute des Nutzers (U1), einschließend zumindest eines vom Geschlecht, des Gewichts, des körperlichen Aktivitätsniveaus und Gesundheitszustand des Nutzers, erwirbt und speichert;
die zweite Speichereinrichtung (23) die Zielwerte (232) für den Zustand des Raums, der das Ziel der Klimatisierung ist, speichert, korreliert mit den Attributen; und
die Klimaanlage (32) Klimatisierung auf Grundlage der Zielwerte (232) ausführt, die mit den Attributen des Nutzers (U1) korreliert die in der ersten Speichereinrichtung (23) gespeichert sind.

5. Klimatisierungssteuersystem (11) nach Anspruch 4, **dadurch gekennzeichnet, dass** die Zielwerte (232) Standardwerte (232a) für jeden Nutzer und Korrekturwerte (232b), die mit den Attributen korreliert sind, enthalten.

6. Klimatisierungssteuersystem (10) nach einem der Ansprüche 1 bis 5, **dadurch gekennzeichnet, dass** die zweite Speichereinrichtung (23) als Zielwerte (232) für den Zustand des Raums zumindest einen Zielwert (232) aus der Temperatur, Luftfeuchtigkeit, Luftströmung und Staubdichte des Raums, der das Ziel der Klimatisierung ist, speichert.

7. Klimatisierungssteuersystem (10) nach einem der Ansprüche 1 bis 6, **dadurch gekennzeichnet, dass**
die zweite Speichereinrichtung (23) die Zielwerte (232) für den Zustand des Raums, der das Ziel der Klimatisierung ist, durch einen Zeitschlitz speichert; und
die Klimaanlage (32) Klimatisierung auf Grundlage der Zielwerte (232) für diesen Zeitschlitz ausführt.

8. Klimatisierungssteuerverfahren, **gekennzeichnet durch** enthaltend:
einen Speicherschritt zum Erwerben und Speichern des Alters eines Nutzers;
einen Berechnungsschritt zum Messen der Zeit, die ab dem Zeitpunkt verstrichen ist, zu welchem das Alter des Nutzers im Speicherschritt erworben wurde, und Berechnen des derzeitigen Alters des Nutzers aus dem Alter des Nutzers, das im Speicherschritt gespeichert wurde, und der berechneten Zeit; und
einen Klimatisierungsschritt zum Ausführen der Klimatisierung auf Grundlage von voreingestellten Zielwerten (232), die mit dem im Berechnungsschritt berechneten Alter korreliert sind.

9. Programm (P1), **gekennzeichnet durch** Veranlassen eines Computers (20) zu funktionieren als:
eine erste Speichereinrichtung (23) zum Erwerben und Speichern des Alters eines Nutzers (U1);
einen Rechner (21) zum Messen der Zeit, die ab dem Zeitpunkt verstrichen ist, zu welchem das Alter des Nutzers (U1) durch die erste Speichereinrichtung (23) erworben wurde, und Berechnen des derzeitigen Alters des Nutzers (U1) aus dem Alter des Nutzers (U1), das in der ersten Speichereinrichtung (23) gespeichert ist, und der berechneten Zeit;
eine zweite Speichereinrichtung (23) zum Speichern von Zielwerten (232) für den Zustand eines Raums, der Gegenstand der Klimatisierung ist, korreliert mit dem Alter; und
eine Ausgabeeinrichtung (24) zum Ausgeben eines Steuersignals zum Ausführen der Klimatisierung auf Grundlage der Zielwerte (232), die mit dem durch den Rechner (21) berechneten Alter korreliert sind.

## Revendications

1. Système de commande de climatisation (10) **caractérisé en ce qu'**il comprend :
un premier dispositif de mémoire (23) pour acquérir et mémoriser l'âge d'un utilisateur (U1) ;
un calculateur (21) pour mesurer le temps qui s'est écoulé depuis l'instant auquel l'âge de l'utilisateur (U1) a été acquis par le premier dispositif de mémoire (23), et calculer l'âge actuel de l'utilisateur (U1) à partir de l'âge de l'utilisateur (U1) mémorisé dans le premier dispositif de mémoire (23) et du temps calculé ;
un deuxième dispositif de mémoire (23) pour mémoriser des valeurs cibles (232) pour l'état d'une pièce qui est le sujet de climatisation, corrélées avec l'âge ; et
un climatiseur (32) pour accomplir la climatisation sur la base des valeurs cibles (232) corrélées avec l'âge calculé par le calculateur (21).

2. Système de commande de climatisation (11) selon la revendication 1, **caractérisé en ce qu'**il comprend en outre un dispositif d'identification (28) pour identifier chacun de multiples utilisateurs (U1, U2) ;
dans lequel le premier dispositif de mémoire (23) acquiert et mémorise l'âge de chacun des multiples utilisateurs (U1, U2) ; et
le calculateur (21) calcule l'âge actuel de l'utilisateur (U1) identifié par le dispositif d'identification.

3. Système de commande de climatisation (11) selon la revendication 2, **caractérisé en ce que** le dispositif d'identification (28) photographie l'utilisateur (U1) et identifie l'utilisateur (U1) sur la base de la prise d'image.

4. Système de commande de climatisation (11) selon l'une quelconque des revendications 1 à 3, **caractérisé en ce que** :
le premier dispositif de mémoire (23) acquiert et mémorise des attributs de l'utilisateur (U1) comprenant au moins l'un parmi le sexe, le poids, le niveau d'activité corporelle et l'état de santé de l'utilisateur ;
le deuxième dispositif de mémoire (23) mémorise les valeurs cibles (232) pour l'état de la pièce qui est la cible de climatisation, corrélées avec les attributs ; et
le climatiseur (32) accomplit la climatisation sur la base des valeurs cibles (232) corrélées avec les attributs de l'utilisateur (U1) mémorisés dans le premier dispositif de mémoire (23).

5. Système de commande de climatisation (11) selon la revendication 4, **caractérisé en ce que** les valeurs cibles (232) comprennent des valeurs standard (232a) pour chaque utilisateur et des valeurs de correction (232b) corrélées avec les attributs.

6. Système de commande de climatisation (10) selon l'une quelconque des revendications 1 à 5, **caractérisé en ce que** le deuxième dispositif de mémoire (23) mémorise, en tant que valeurs cibles (232) pour l'état de la pièce, au moins une valeur cible (232) parmi la température, l'humidité, la circulation d'air et la densité de poussière de la pièce qui est la cible de climatisation.

7. Système de commande de climatisation (10) selon l'une quelconque des revendications 1 à 6, **caractérisé en ce que** :
le deuxième dispositif de mémoire (23) mémorise les valeurs cibles (232) pour l'état de la pièce qui est la cible de climatisation par tranche de temps ; et
le climatiseur (32) accomplit la climatisation sur la base des valeurs cibles (232) pour cette tranche de temps.

8. Procédé de commande de climatisation **caractérisé en ce qu'**il comprend :
une étape de mémorisation pour acquérir et mémoriser l'âge d'un utilisateur ;
une étape de calcul pour mesurer le temps qui s'est écoulé depuis l'instant auquel l'âge de l'utilisateur a été acquis à l'étape de mémorisation, et calculer l'âge actuel de l'utilisateur à partir de l'âge de l'utilisateur mémorisé à l'étape de mémorisation et du temps calculé ; et
une étape de climatisation pour accomplir la climatisation sur la base de valeurs cibles (232) prédéterminées corrélées avec l'âge calculé à l'étape de calcul.

9. Programme (P1) **caractérisé en ce qu'**il amène un ordinateur (20) à fonctionner en tant que :
premier dispositif de mémoire (23) pour acquérir et mémoriser l'âge d'un utilisateur (U1) ;
calculateur (21) pour mesurer le temps qui s'est écoulé depuis l'instant auquel l'âge de l'utilisateur (U1) a été acquis par le premier dispositif de mémoire (23), et calculer l'âge actuel de l'utilisateur (U1) à partir de l'âge de l'utilisateur (U1) mémorisé dans le premier dispositif de mémoire (23) et du temps calculé ;
un deuxième dispositif de mémoire (23) pour mémoriser des valeurs cibles (232) pour l'état d'une pièce qui est le sujet de climatisation, corrélées avec l'âge ; et
un dispositif de sortie (24) pour sortir un signal de commande pour accomplir la climatisation sur la base des valeurs cibles (232) corrélées avec l'âge calculé par le calculateur (21).
